# EUROPEAN PATENT SPECIFICATION

(11) **EP 1 693 144 B1**
(45) Date of publication and mention of the grant of the patent: **29.08.2007**
(21) Application number: 05425081.6
(22) Date of filing: 18.02.2005
(51) Int. Cl.: B23Q 1/54, B23Q 5/04

(54) **Bevel gearing assembly with a polygonal profiled shaft, for tool-holding turrets**
Kegelräderanordnung mit polygonförmiger Querschnittprofilwelle, für Werkzeugrevolver
Ensemble d'engrenages coniques avec arbre à section polygonale, pour tourelle porte-outil

(43) Date of publication of application: 23.08.2006
(73) Proprietor: MARIO PINTO S.p.A., 10135 Torino (IT)
(72) Inventor: Bronzino, Pier Domenico, 10040 Caprie (TO) (IT)
(74) Representative: Spandonari, Carlo

(56) References cited:
- EP-A- 0 782 950
- CA-A1- 1 197 123
- GB-A- 1 253 361
- US-A- 4 953 411
- PATENT ABSTRACTS OF JAPAN vol. 012, no. 083 (M-677), 16 March 1988 (1988-03-16) & JP 62 224540 A (WASHINO KIKAI KK), 2 October 1987 (1987-10-02)

## Description

The present invention relates to a bevel gearing assembly for tool-holding turrets of machine tools and machining centers (see for example document JP-A-62224540).

In certain types of machine tools and machining centers, the tool is driven by a motor arranged with its axis at right angles to the axis of rotation of the tool, via a bevel gearing assembly which is housed in the tool-holding turret of the machine. The gearing assembly typically comprises a driving bevel gear connected to the motor and meshing with a driven bevel gear supported on a tool-holding shaft on which is mounted the machining tool.

A widespread system for connecting the driven bevel gear to the tool-holding shaft is the typical coupling by keying. A drawback of coupling by keying, as well known to persons skilled in the art, is that the driven gear, after a relatively short time, may start cracking near the sharp edges of the key seat, due to the constant stress to which the gear is subjected during rotation. In a relatively short time, the crack enlarges and causes the gear to break. Moreover, cutting the key seat causes undesired weakening of the driven shaft. Such circumstance particularly affects the sturdiness of those shafts having lubricating channels bored therein, as it often occurs, which channels cause weakening of the driven shaft.

Recently, it has also been suggested to couple the driven bevel gear on the tool-holding shaft by spline coupling. However, this coupling system is very expensive, because a high machining accuracy is required for the splines of the driven gear to precisely match with the splines of the tool-holding shaft. Furthermore, after machining the splines, the tool-holding shaft and the driven gear must be subjected to a hardening treatment for attaining the required mechanical resistance. Nevertheless, this treatment may cause the workpiece to become distorted, so that it must be subjected to a finishing treatment after the heat treatment. However, as well known to the person skilled in the art, machining hardened workpieces having a tortuous profile, such as the spline shafts, is very expensive and often gives unsatisfactory results, so that this system is not convenient.

Therefore, it is a main object of the present invention to provide a bevel gearing assembly for tool-holding turrets of machine tools, in which the driven gear is coupled on the tool-holding shaft with better accuracy and reliability than the known coupling systems, thereby considerably reducing the risk of breaks and mechanical failures, as well as limiting the replacements and maintenance operations.

It is another object of the invention to provide a gearing assembly having low manufacturing costs compared with the known gearing assemblies such as the above-mentioned ones.

Said objects and other advantages that will better appear below are achieved by a bevel gearing assembly having the features recited in claim 1, while the other claims state other advantageous, though secondary features of the invention.

The invention will be now described in more detail with reference to a few preferred, non-exclusive embodiments shown by way of non limiting example in the attached drawings, wherein:
Fig. 1 is a view in axial cross-section of the gearing assembly according to the invention;
Fig. 2 separately shows the driven bevel gear of the gearing assembly according to the invention, in a cross-section view along line II-II of Fig. 1;
Fig. 3 separately shows the tool-holding shaft of the gearing assembly according to the invention, in a cross-section view similar to Fig. 2;
Fig. 4 is a cross-section view similar to Figs. 2, 3, showing the driven bevel gear mounted on the tool-holding shaft of the gearing assembly according to the invention;
Fig. 5 is a view in axial cross-section and to an enlarged scale of a detail of the gearing assembly according to an alternative embodiment of the invention.

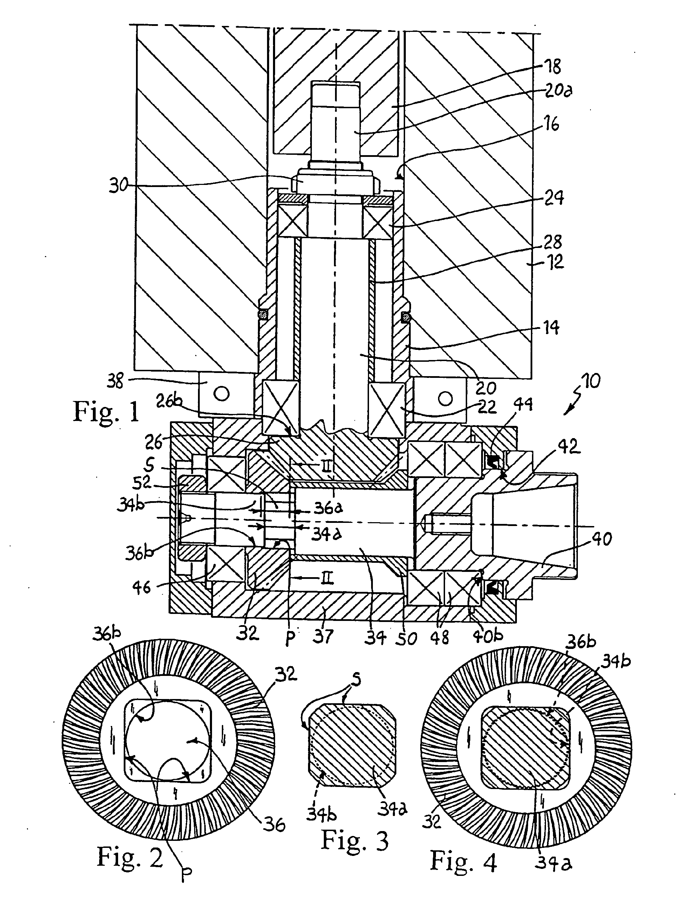

With initial reference to Fig. 1, a bevel gearing assembly 10 is mounted on the tool-holding turret 12 of a general machine tool (not shown).

Gearing assembly 10 comprises a sleeve 14 housed in a generally cylindrical seat 16 of tool-holding turret 12. A drive 18 axially projects into generally cylindrical seat 16. A driving shaft 20 is pivotally supported inside sleeve 14 on rolling bearings 22, 24. The innermost end of driving shaft 20 is tang-shaped in 20a and is unlockably connected to drive 18. The outermost end of driving shaft 20 integrally supports a driving bevel gear 26, which may be an insert. Bearings 22, 24 are spaced by a cylindrical spacer 28 fitted on driving shaft 20, and are axially clamped between an abutment 26b of driving bevel gear 26 and a ring nut 30 that is screwed to driving shaft 20 near its innermost end.

Driving bevel gear 26 meshes with a driven bevel gear 32 coupled on a tool-holding shaft 34 that is arranged at right angles to driving shaft 20. To this purpose, driven bevel gear 32 has an axial hole 36 in which tool-holding shaft 34 is received. Tool-holding shaft 34 is pivotally supported in a housing 37 that is fixed to tool-holding turret 12, as will be better described below.

According to this invention, an axial, shaped portion 36a of axial hole 36 and an axial, shaped portion 34a of tool-holding shaft 34, which is engaged by said axial, shaped portion 36a of axial hole 36, are provided with respective, complementary square sections; accordingly, the surface of axial hole 36 has four facets such as P extending along said squared, shaped portion 36a and engaged by corresponding facets such as S extending along said axial, shaped portion 34a on the outer surface of tool-holding shaft 34, for rotational coupling purpose.

Axial hole 36 also has a cylindrical, axial portion 36b engaged by a complementary, cylindrical axial portion 34b of tool-holding shaft 34 for centering purposes.

As mentioned above, tool-holding shaft 34 is pivotally supported within housing 37, the latter being fixed to tool-holding turret 12 by screws or other coupling means (not shown), e.g. VDI, with interposition of a concentricity-registering collar 38. Sleeve 14 and housing 37 form a frame as a whole for gearing assembly 10. A tool-holding seat 40 is integrally supported at one end of tool-holding shaft 34 and projects outwardly from housing 37 through an opening 42 bored therein. A gasket 44 is arranged on the perimeter of the opening and sealingly surrounds tool-holding seat 40. Tool-holding shaft 34 is supported on a pair of rolling bearings 46, 48, which are arranged astride of driven bevel gear 32, with interposition of a spacer 50, and are axially clamped between an abutment 40b of tool-holding seat 40 and a ring nut 52.

Advantageously, facets P on the surface of axial hole 36 and corresponding facets S on tool-holding shaft 34 are machined by milling after performing a hardening treatment upon driven bevel gear 32 and tool-holding shaft 34 respectively. This allows the driven bevel gear 32 to be accurately coupled on tool-holding shaft 34, and consequently the bevel gears to accurately mesh with each other.

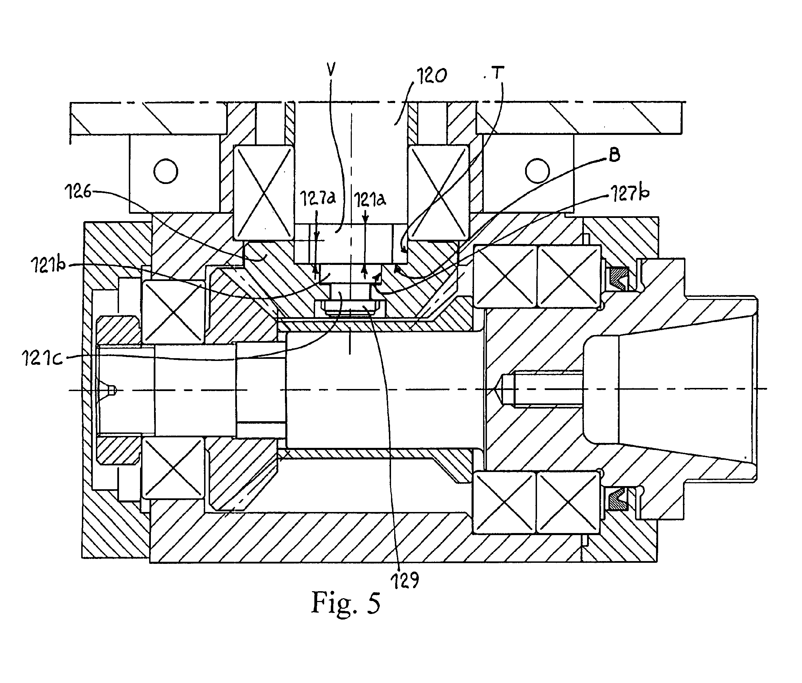

Fig. 5 shows an alternative embodiment of the gearing assembly according to the invention, which only differs from the above embodiment in that driving bevel gear 126 is also coupled on its respective driving shaft 120 by mutual engagement of complementary plane surfaces. In particular, driving bevel gear 126 has an axial hole engaged by an ending portion of driving shaft 120. Similarly to what described above with reference to the driven bevel gear coupled on the tool-holding shaft, an axial, shaped portion 127a of the axial hole of driving bevel gear 126 and an inner, axial shaped portion 121 a of the end of driving shaft 120, which is engaged by said axial, shaped portion 127a, are provided with respective, complementary square sections. The surface of the axial hole has four facets such as T extending along said squared, shaped portion 127a and engaged by corresponding facets such as V extending along the axial, shaped portion 121a on the outer surface of driving shaft 120, for rotational coupling purposes.

Axial shaped portion 12 a of driving shaft 120 terminates with an abutment B.

The axial hole also has a cylindrical, axial portion 127b engaged by a complementary, cylindrical middle portion 121b provided on the end of the driving shaft and projecting from abutment B, for centering purposes.

The end of driving shaft 12 is provided with an outer, threaded portion 121c projecting from cylindrical, middle portion 121b and having a ring nut 129 screwed thereto for axially clamping driving bevel gear 126 against abutment B.

Of course, it will be understood that the square profiles or generally polygonal profiles mentioned in the present description may have bevelled/chamfered corners, such as are necessarily generated during milling operations, particularly when machining hollow surfaces such as the axial shaped spans of the holes on the bevel gears, as well known to the person skilled in the art. However, this does not detract from the effectiveness of the invention; in fact, absence of any sharp corners is actually desirable, particularly from the inner surface of the axial holes bored in the bevel gears, because it contributes to prevent formation of cracks on the gear during rotation, even in case of high torques.

A few preferred embodiments of the invention have been described herein, but of course many changes may be made by a person skilled in the art, within the scope of the inventive concept. In particular, although, in the example shown, the bevel gears are coupled to their respective shafts by mutual engagement of complementary, square profiles, other polygonal profiles may of course be suitable for coupling the bevel gear on its respective shaft, provided that they have at least one pair of complementary, mutually engaged, plane surfaces. However, polygonal profiles with a number of plane surfaces in the range 2 to 8 are believed to give better performance in terms of coupling accuracy.

## Claims

1. A bevel gearing assembly (10) for tool-holding turrets (12) of machine tools, comprising a frame (14, 37) which is mountable on the tool-holding turret (12) and pivotally supports a driving bevel gear (26) connectable to a drive (18) of the tool-holding turret (12), and a tool-holding shaft (34), which is arranged at right angles to the driving bevel gear (26) and supports a driven bevel gear (32) meshing with said driving bevel gear (26), **characterized in that** said driven bevel gear (32) has an axial hole (36) whose surface surrounds said tool-holding shaft (34) and which is provided with first facets (P) rotationally engaged by corresponding second facets (S) on the outer surface of the tool-holding shaft (34), as well as with a cylindrical, axial portion (36b) engaged by a complementary, centering, cylindrical axial portion (34b) of the tool-holding shaft (34).

2. The gearing assembly of claim 1, **characterized in that** said first facets (P) define an axial, shaped portion (36a) of the hole, having a polygonal profile.

3. The gearing assembly of claim 2, **characterized in that** said axial, shaped portion (36a) of the hole has a square profile.

4. The gearing assembly of any of claims 1 to 3, **characterized in that** said second facets define an axial, shaped portion (34a) of the shaft, having a square profile.

5. The gearing assembly of any of claims 1 to 4, **characterized in that** said first facets (P) and said second facets (S) are machined by milling after performing a hardening treatment upon the driven bevel gear (32) and upon the tool-holding shaft (34) respectively.

6. The gearing assembly of any of claims 1 to 5, in which said driving bevel gear (126) is also supported on a driving shaft (120) connectable to a drive, **characterized in that** said driving bevel gear (126) has an axial hole, whose surface surrounds said driving shaft (120) and is provided with first facets (T) rotationally engaged by corresponding second facets (V) on the outer surface of the driving shaft (120).

7. The gearing assembly of claim 6, **characterized in that** said first facets (T) of the driving bevel gear (126) define an axial, shaped portion (127a) of the hole, having a polygonal profile.

8. The gearing assembly of claim 7, **characterized in that** said axial, shaped portion (127a) of the hole of the driving bevel gear (126) has a square profile.

9. The gearing assembly of any of claims 6 to 8, **characterized in that** said second facets (V) on the outer surface of the driving shaft (120) define an axial, shaped portion (121a) of the shaft, having a square profile.

10. The gearing assembly of any of claims 6 to 9, **characterized in that** said axial hole of the driving bevel gear (126) also has a cylindrical, axial portion (127b) engaged by a complementary, centering, cylindrical axial portion (121b) of the tool-holding shaft (120).

11. The gearing assembly of any of claims 6 to 10, **characterized in that** said first facets (T) and said second facets (V) are machined by milling after performing a hardening treatment upon the driving bevel gear (126) and the driving shaft (120) respectively.

## Patentansprüche

1. Kegelzahnradanordnung (10) für Werkzeugrevolver (12) von Werkzeugmaschinen, die einen Rahmen (14, 37) umfasst, der an dem Werkzeugrevolver (12) anbringbar ist und drehbar ein antreibendes Kegelzahnrad (26) lagert, das mit einem Antrieb (18) des Werkzeugrevolvers (12) verbindbar ist, und eine Werkzeugwelle (34), die rechtwinklig zu dem antreibenden Kegelzahnrad (26) angeordnet ist und ein angetriebenes Kegelzahnrad (32) lagert, das sich mit dem antreibenden Kegelzahnrad (26) im Zahneingriff befindet, **dadurch gekennzeichnet, dass** das angetriebenen Kegelzahnrad (32) eine axiale Öffnung (36) besitzt, deren Oberfläche die Werkzeugwelle (34) umgibt und die mit ersten Facetten (P) versehen ist, welche sich Im Dreheingriff mit korrespondierenden zweiten Facetten (S) an der äußeren Oberfläche der Werkzeugwelle (34) befinden, sowie mit einem zylindrischen, axialen Abschnitt (36b), der sich im Eingriff mit einem komplementären, zentrierenden, zylindrischen axialen Abschnitt (34b) der Werkzeugwelle (34) befindet,

2. Zahnradanordnung nach Anspruch 1, **dadurch gekennzeichnet, dass** die ersten Facetten (P) einen axialen, geformten Abschnitt (36a) der Öffnung definieren, der ein polygonales Profil besitzt.

3. Zahnradanordnung nach Anspruch 2, **dadurch gekennzeichnet, dass** der axiale, geformte Abschnitt (36a) der Öffnung ein quadratisches Profil besitzt.

4. Zahnradanordnung nach einem der Ansprüche 1 bis 3, **dadurch gekennzeichnet, dass** die zweiten Facetten einen axialen, geformten Abschnitt (34a) der Welle definieren, der ein quadratisches Profil besitzt.

5. Zahnradanordnung nach einem der Ansprüche 1 bis 4, **dadurch gekennzeichnet, dass** die ersten Facetten (P) und die zweiten Facetten (S) durch Fräsen erzeugt werden, nachdem eine Härtebehandlung an dem angetriebenen Kegelzahnrad (32) bzw. an der Werkzeugwelle (34) durchgeführt worden ist.

6. Zahnradanordnung nach einem der Ansprüche 1 bis 5, in der das antreibende Kegelzahnrad (126) auch an einer Antriebswelle (120) gelagert ist, die mit einem Antrieb verbindbar ist, **dadurch gekennzeichnet, dass** das antreibende Kegelrad (126) eine axiale Öffnung besitzt, deren Oberfläche die Antriebswelle (120) umgibt und die mit ersten Facetten (T) versehen ist, welche sich im Dreheingriff mit korrespondierenden zweiten Facetten (V) an der äußeren Oberfläche der Antriebswelle (120) befinden.

7. Zahnradanordnung nach Anspruch 6, **dadurch gekennzeichnet, dass** die ersten Facetten (T) des antreibenden Kegelzahnrads (126) einen axialen, geformten Abschnitt (127a) der Öffnung definieren, der ein polygonales Profil besitzt.

8. Zahnradanordnung nach Anspruch 7, **dadurch gekennzeichnet, dass** der axiale, geformte Abschnitt (127a) der Öffnung des antreibenden Kegelzahnrads (126) ein quadratisches Profil besitzt.

9. Zahnradanordnung nach einem der Ansprüche 6 bis 8, **dadurch gekennzeichnet, dass** die zweiten Facetten (V) an der äußeren Oberfläche der Antriebswelle (120) einen axialen, geformten Abschnitt (121a) der Weile definieren, der ein quadratisches Profil besitzt.

10. Zahnradanordnung nach einem der Ansprüche 6 bis 9, **dadurch gekennzeichnet, dass** die axiale Öffnung des antreibenden Kegelzahnrads (126) auch einen zylindrischen, axialen Abschnitt (127b) besitzt, der sich Im Eingriff mit einem komplementären, zentrierenden, zylindrischen axialen Abschnitt (121b) der Werkzeugwelle (120) befindet.

11. Zahnradanordnung nach einem der Ansprüche 6 bis 10, **dadurch gekennzeichnet, dass** die ersten Facetten (T) und die zweiten Facetten (V) durch Fräsen erzeugt werden, nachdem eine Härtebehandlung an dem antreibenden Kegelzahnrad (126) bzw. an der Antriebswelle (120) durchgeführt worden ist.

## Revendications

1. Ensemble d'engrenages coniques (10) pour des tourelles porte-outils (12) de machines-outils, comprenant une structure (14, 37) qui peut être montée sur la tourelle porte-outil (12) et qui supporte de manière pivotante un engrenage conique menant (26) qui peut être relié à un mécanisme d'entraînement (18) de la tourelle purte-outil (12), et un arbre porte-outil (34), qui est disposé à angles droits par rapport à l'engrenage conique menant (26) et supporte un engrenage conique mené (32) venant en prise avec ledit engrenage conique menant (26), **caractérisé en ce que** ledit engrenage conique mené (32) possède un trou axial (36) dont la surface entoure ledit arbre porte-outil (34) et qui est doté de premières facettes (P) entrant en prise de manière rotative avec des secondes facettes correspondantes (S) sur la surface externe de l'arbre porte-outil (34), ainsi que d'une partie axiale cylindrique (36b) entrant en prise avec une partie axiale cylindrique complémentaire de centrage (34b) de l'arbre porte-outil (34).

2. Ensemble d'engrenages selon la revendication 1, **caractérisé en ce que** lesdites premières facettes (P) définissent une partie axiale profilée (36a) du trou, possédant un profil polygonal.

3. Ensemble d'engrenages selon la revendication 2, **caractérisé en ce que** ladite partie axiale profilée (36a) du trou possède un profil carre.

4. Ensemble d'engrenages selon l'une quelconque des revendications 1 à 3, **caractérisé en ce que** lesdites secondes facettes définissent une partie axiale profilée (34a) de l'arbre, possédant un profil carré.

5. Ensemble d'engrenages selon l'une quelconque des revendications 1 à 4, **caractérisé en ce que** lesdites premières facettes (P) et lesdites secondes facettes (S) sont usinées par fraisage après avoir réalisé un traitement de durcissement respectivement sur l'engrenage conique mené (32) et sur l'arbre porte-outil (34).

6. Ensemble d'engrenages selon l'une quelconque des revendications 1 à 5, dans lequel ledit engrenage conique menant (126) est également supporté sur un arbre d'entraînement (120) qui peut être relié à un mécanisme d'entraînement, **caractérisé en ce que** ledit engrenage conique menant (126) possède un trou axial, dont la surface entoure ledit arbre d'entraînement (120) et est doté de premières facettes (T) entrant en prise de manière rotative avec des secondes facettes correspondantes (V) sur la surface externe de l'arbre d'entraînement (120).

7. Ensemble d'engrenages selon la revendication 6, **caractérisé en ce que** lesdites premières facettes (T) de l'engrenage conique menant (126) définissent une partie axiale profilée (127a) du trou, possédant un profil polygonal.

8. Ensemble d'engrenages selon la revendication 7, **caractérisé en ce que** ladite partie axiale profilée (127a) du trou de l'engrenage conique menant (126) possède un profil carré.

9. Ensemble d'engrenages selon l'une quelconque des revendications 6 à 8, **caractérisé en ce que** lesdites secondes facettes (V) sur la surface externe de l'arbre d'entraînement (120) définissent une partie axiale profilée (121a) de l'arbre, possédant un profil carré.

10. Ensemble d'engrenages selon l'une quelconque des revendications 6 à 9, **caractérisé en ce que** ledit trou axial de l'engrenage conique menant (126) possède également une partie axiale cylindrique (127b) entrant en prise avec une partie axiale cylindrique complémentaire de centrage (121b) de l'arbre porte-outil (120).

11. Ensemble d'engrenages selon l'une quelconque des revendications 6 à 10, **caractérisé en ce que** lesdites premières facettes (1) et lesdites secondes facettes (V) sont usinées par fraisage après avoir réalisé un traitement de durcissement respectivement sur l'engrenage conique menant (126) et sur l'arbre d'entraînement (120).
